# EUROPEAN PATENT SPECIFICATION

(11) **EP 1 487 656 B1**
(45) Date of publication and mention of the grant of the patent: **08.03.2006**
(21) Application number: 03707284.0
(22) Date of filing: 12.03.2003
(51) Int. Cl.: B60K 25/00, B62D 33/073

(54) **COMBINED TRANSPORT AND WORK VEHICLE**
KOMBINIERTES TRANSPORT- UND ARBEITSFAHRZEUG
VEHICULE DE TRANSPORT ET DE TRAVAIL COMBINE

(30) Priority: 15.03.2002 SE 0200789
(43) Date of publication of application: 22.12.2004
(73) Proprietor: Scania CV AB (publ), 151 87 Södertälje (SE)
(72) Inventor: JENSEN, Anders, S-646 32 Gnesta (SE)
(86) International application number: PCT/SE2003/000410
(87) International publication number: WO 2003/078193

(56) References cited:
- US-A- 5 251 722
- US-A- 6 015 019
- US-B1- 6 308 441

## Description

### BACKGROUND TO THE INVENTION, AND STATE OF THE ART

The invention relates to a combined transport and work vehicle according to the preamble of claim 1.

Combined transport and work vehicles usually comprise work appliances which require activation of the vehicle's engine to power them. This usually involves using a so-called PTO (power take-off) to supply driving power to the work appliance. The PTO usually receives driving power from the engine's driveline via a transmission element in the vehicle's gearbox. The PTO is usually connected to a hydraulic pump which drives said appliance. To enable the appliance to be powered via the hydraulic pump, the driver has to start the vehicle's engine from the driving cab. When the need for use of the work appliance ends, the driver has to climb back up into the cab in order to stop the vehicle's engine. For a driver on his own this may be difficult. It is time-consuming and reduces the vehicle's effectiveness as a work vehicle.

US 6 015 019 A refers to a combined transport and work vehicle according to the preamble of claim 1 whereby operation and control when the vehicle is being used as a work vehicle can be conducted by means of a remote control from a control station situated at a rear portion of the vehicle. To enable such operation of the vehicle, a hydraulic auxiliary motor is arranged to be connectable to the vehicle's driveline. By means of the remote control, the hydraulic auxiliary motor can be controlled so that the vehicle travels forwards at a well-controlled low speed. However, the remote control does not make it possible to control the vehicle's engine, which can probably only be controlled, i.e. started up and switched off, in a conventional manner from the vehicle's driving cab

### SUMMARY OF THE INVENTION

The object of the present invention is to provide a combined transport and work vehicle whereby, when the vehicle is being used as a work vehicle, it is possible to effect, from a space outside the driver's space, at least one function which during the operation of the vehicle can be effected from the driver's space. Another object is to provide such external control at a relatively low cost and with a high degree of safety.

The object stated above is achieved with the device mentioned in the introduction which is characterised by what is indicated in the characterising part of claim 1. Such a connecting means provides easy and safe control of where said function is to be effected from. The control unit makes it possible to receive control signals from both the first and the second control. On the basis of information about the position of the connecting means, the control unit can be used to effect said function according to the control signals transmitted from the control which is indicated by the position of the connecting means. The control unit bars in an appropriate manner any control signals received from the control not selected. Control signals from the unselected control are thus prevented from affecting the activation of said function.
According to the invention, the connecting means is arranged to be placed automatically in the first position when an ignition system of the vehicle is activated. If the connecting means is not already in the first position when the starting key is turned, a change of connection to the first position takes place automatically. The risk of a driver forgetting to move the connecting means back to the first position before the vehicle is set in motion is thus eliminated.

According to one embodiment of the invention, the control unit is arranged adjacent to the driver's space. Such positioning of the control unit makes it possible to use substantially a single cable for the transmission from the control unit, to the component in the vehicle which activates said function, of control signals from both the first and second controls. Separate cables for the various controls from the driver's space to said component are thus substantially obviated. Such a single cable provides the extra possibility of control according to the invention outside the driver's space at a relatively low cost. The connecting means is with advantage arranged in the driver's space. This means that only the vehicle's driver can place the connecting means in a desired position. The driver thus determines where said function is to be effected from, thereby reducing the risk of the connecting means being in an incorrect position. The connecting means is with advantage a toggle switch. Such a connecting means is of reliable design and can easily be applied at an appropriate point in the instrument panel of a vehicle.

The connecting means may be spring-loaded to urge it towards the first position so that the connecting means will be unambiguously in the first position when the second position of the connecting means is disconnected. The vehicle preferably comprises in the driver's space an indicating means which indicates when said function is being effected from the second control. The indicating means is with advantage an indicating lamp in the vehicle's instrument panel which is illuminated when effecting said function is allowed from the second control in the space outside the driver's space.

According to another embodiment of the present invention, the second control is comprised in an operating unit which comprises a cable link with the control unit. Such an operating unit may comprise a multiplicity of controls in the form of buttons making it possible to obtain control signals which are transmitted to the control unit via the cable link. The operating unit may possibly comprise a cable which is detachably connectable to a socket outlet in the vehicle. Alternatively, the second control may be comprised in an operating unit which comprises at least one partly wireless link with the control unit. In such cases the operating unit comprises a transmitter which wirelessly transmits control signals from the operating unit to a receiver in the vehicle. The operator with the operating unit is thus enabled to move about rather freely around the vehicle without having to pay attention to a cable hanging from the operating unit.

According to another preferred embodiment of the present invention, said function comprises control of the vehicle's prime mover. Said function is, for example, starting the engine, adjusting the engine's speed or stopping the engine. Effecting all these functions is with advantage possible from the second control. In many combined transport and work vehicles, a combustion engine such as a diesel engine is used as prime mover for movement of the vehicle. Making it possible to use the vehicle as a work vehicle when the operation of work appliances is required usually involves having to start the vehicle's prime mover. The operating unit can be used to start and stop the prime mover from substantially any desired position. Thus persons using work appliances when the vehicle is being used as a work vehicle need not go to the driver's space each time the engine has to be started or stopped. The vehicle may be used more efficiently when the person concerned can concentrate entirely on operating the work appliance. Said function may preferably comprise control of warning equipment of the vehicle, in which case said function may comprise the delivery of warning acoustic and light signals and the activation of warning flashers. The operator of the operating unit can thus draw the attention of other road users to the presence of the stationary work vehicle. It is possible that the operating unit may be made capable of effecting further functions or combinations of functions. Such functions may for example comprise activation of a parking brake. It is also possible to obtain via the operating unit information from the control unit concerning, for example, whether the vehicle is perfectly stationary and whether there is a driver in the driver's space.

### BRIEF DESCRIPTION OF THE DRAWINGS

Preferred embodiments of the invention are described below by way of examples with reference to the attached drawings, in which:
- Fig. 1: depicts a tanker vehicle with an operating unit according to a first embodiment, and
- Fig. 2: depicts schematically a driver's space in a vehicle with an operating unit according to a second embodiment.

### DETAILED DESCRIPTION OF PREFERRED EMBODIMENTS OF THE INVENTION

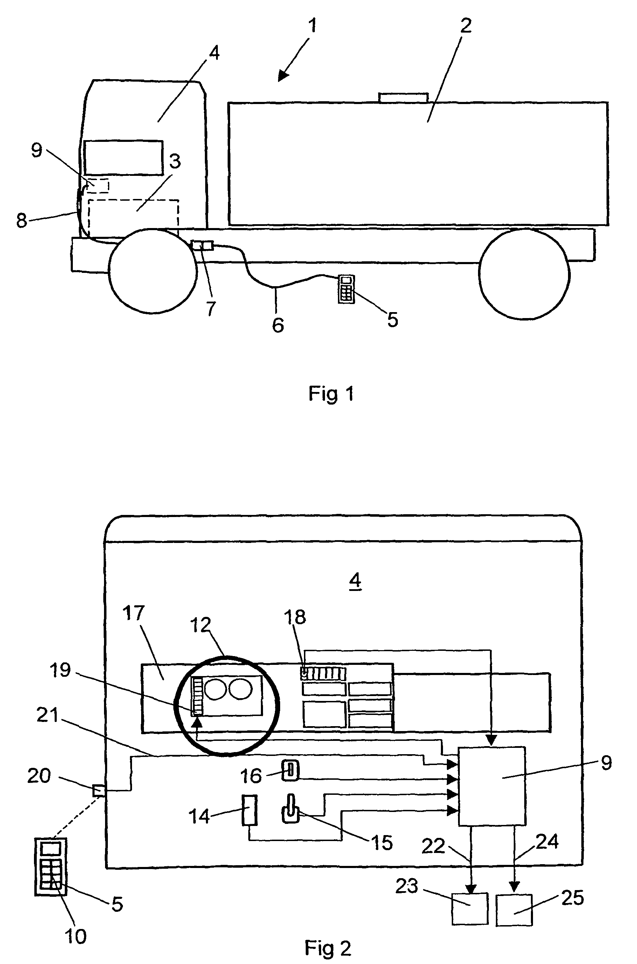

Fig. 1 depicts a combined transport and work vehicle which in this example takes the form of a tanker vehicle 1. The tanker vehicle 1 incorporates a tank 2 for carrying, for example, liquid fuel such as light fuel oil. Such a tanker vehicle 1 usually incorporates work equipment in the form of at least one work appliance in the form of a pump to allow oil to be delivered from the tank 2 to a receiving tank at the premises of a customer who has ordered light fuel oil. When such a vehicle is used as a work vehicle, such work appliance is usually connected to a so-called PTO (power take-off) of the vehicle for operation even when the vehicle is stationary, e.g. by engaging a new position for a gearbox and applying a parking brake. The PTO transmits driving power from the vehicle's driveline, usually via one or more gearwheels in the vehicle's gearbox, to, for example, a hydraulic pump which powers the work appliance. Operating the work appliance thus requires operation of the vehicle's engine 3, which can only be effected from a driver's space 4 of a conventional vehicle.

In the example of the tanker vehicle 1, a delivery involves the driver or an assistant connecting a hose between the tank 2 and said receiving tank. While this operation is taking place, it is advantageous that the vehicle's engine 3 be not running. When the connection has been made, the vehicle's engine 3 is started from the driver's space 4. When a specified quantity of oil has been delivered to the receiving tank, the vehicle's engine 3 has to be switched off before the hose is disconnected. This starting and stopping of the vehicle's engine 3 from the driver's space 4 of a conventional combined transport and work vehicle is time-consuming, reducing the vehicle's efficiency as a work vehicle. Alternatively, the vehicle's engine 3 may be allowed to run continuously throughout the delivery, but this has the disadvantage of not only consuming an unnecessary amount of fuel but also causing unreasonably large discharges of exhaust gases.

To reduce the time the delivery takes and increase the vehicle's efficiency as a work vehicle, a second control in the form of an operating unit 5 (see Fig. 1) is connected detachably via a cable 6 to a socket outlet 7 provided for the purpose on the vehicle. A cable 8 leads from the socket outlet 7 to an electrical control unit 9 arranged adjacent to the driver's space 4 of the vehicle. The operating unit 5 incorporates a multiplicity of buttons 10 whereby it is possible inter alia to start and stop the vehicle's engine 3. In most cases the vehicle's engine 3 is a combustion engine, e.g. a diesel engine. It is also possible to control the speed of the engine 3 by means of the operating unit 5. The cable 6 makes it possible to use the operating unit 5 from substantially any desired position outside the driver's space 4. With access to such an operating unit 5, a driver who, for example, delivers light fuel oil, need not climb up into the driver's space 4 of the vehicle several times during the delivery in order to control the vehicle's engine 3.

Fig. 2 depicts schematically the driver's space 4 of the vehicle 1 in more detail. The driver's space 4 incorporates in a conventional manner various controls such as, for example, a steering wheel 12, an accelerator pedal 14, an ignition lock 16 and a parking brake 15, for effecting various functions in connection with controlling the vehicle 1. The driver's space 4 usually also incorporates other controls, e.g. for activation of flashers, acoustic warning signals, visual warning signals etc. These controls are not shown in Fig. 2 but they all make it possible to effect some kind of function which can also be effected by the operating unit 5. The driver's space 4 incorporates an instrument panel 17 which comprises inter alia a connecting means in the form of a toggle switch 18. The toggle switch 18 is movable between a first position and a second position. The first position corresponds to a transport position when the vehicle is being used as a transport vehicle. The toggle switch in that position enables the vehicle to be controlled in a conventional manner from the driver's space 4. The second position corresponds to a work position when the vehicle is being used as a work vehicle, making it possible to effect one or more preselected functions from the operating unit 5. The operating unit 5 incorporates a number of buttons 10 which each have a function corresponding to a control in the driver's space 4. The control unit 9 makes it possible to receive control signals both from the controls in the driver's space 4 and from the operating unit. The control unit 9 also receives an information signal from the toggle switch 18 concerning the latter's position. Depending on the position of the toggle switch 18, the control unit 9 monitors whether said functions are to be effected from the driver's space 4 or from the operating unit 5. An indicating lamp 19 in the instrument panel is designed to be illuminated when the toggle switch 18 is in the second position. A person in the driver's space is thus informed as to whether said functions can then be effected from the operating unit 5.

Fig. 2 depicts an alternative operating unit 5 which has a transmitter for wireless transmission of control signals to a receiver 20 which is arranged at an appropriate point in the vehicle 1. From the receiver 20, the control signal is led via a cable 21 to the control unit 9. The control unit 9 is situated adjacent to the driver's space 4. Such a location of the control unit 9 makes it possible for substantially a single cable line to be used from the control unit 9 for transmitting control signals both from the driver's space 4 and from the operating unit 5 to the components in the vehicle which activate said functions. Thus there need be only one cable 22 between, for example, the control unit 9 and a starter motor 23 to enable the transmission of control signals both from the ignition lock 16 in the driver's space 4 and from the operating unit 5 for starting the engine 3. Another component which makes it possible to control the engine's speed is a fuel pump 25 which thus regulates the fuel supply to the engine 3. Here again, merely a single cable 24 need be arranged between the control unit 9 and the fuel pump 25. Such common cables 22, 24 to various components 23, 25 of the vehicle provide the extra control facility via the operating unit 5 at a relatively low cost. As the toggle switch 18 is arranged in the driver's space 4, only the driver or a person in the driver's space can change the position of the toggle switch 18. The risk of the toggle switch 18 being inadvertently in an incorrect position is thus considerably reduced.

During movement of the tanker vehicle 1, the toggle switch 18 is always in the first position and the vehicle is controlled in a conventional manner by means of the controls in the driver's space 4. The control unit 9 is designed to change the position of the toggle switch 18 as necessary to the first position when the vehicle's ignition 16 is activated, i.e. when the starting key is turned. There is thus assurance that the toggle switch 18 will not be in the second position during operation as a transport vehicle. When the tanker vehicle 1 arrives at a delivery point, the driver switches off the vehicle's engine 3 and moves the toggle switch 18 to the second position. The indicating lamp 19 lights up. The driver may also operate a circuit-breaker to connect the PTO. The driver leaves the driver's space 4 and takes the operating unit 5 with him/her. The cable 6 of the operating unit 5 is connected to the socket outlet 7 if the operating unit 5 is of the type depicted in Fig. 1. Thereafter the driver can perform necessary operations such as connecting a hose between the tank 2 and a receiving tank. The driver then presses the button 10 of the operating unit 5 which corresponds to the function of starting the vehicle's engine 3. If the operating unit 5 is wireless, a control signal passes from the transmitter in the operating unit 5 to the receiver 20 in the vehicle. The control signal is led on via the cable 21 to the control unit 9. The control unit 9 also receives an information signal from the toggle switch 18 to the effect that the latter is in the second position. The control unit 9 initiates control signals to the starter motor 23 and the fuel pump 25 via the cables 22, 24 so that the engine 3 is started up with a suitable fuel supply to support the operation of the engine 3. Thereafter the driver starts the pump which is driven via the PTO and the oil is delivered from the tank 2 to the receiving tank. If necessary, the operating unit 5 may provide, upon pressing of the appropriate buttons, control signals which, for example, activate functions such as, for example, engine speed control, warning flashers, acoustic signal horn and work lighting.

When the required quantity of oil has been delivered from the tank 2 to the receiving tank, the pump is switched off. Pressing a button 10 intended for the purpose on the operating unit 5 causes the transmission thereafter to the control unit 9 of a control signal which stops the engine 3. This is followed by the operation of disconnecting the hose. When that operation has been completed, the driver climbs into the driver's space 4 and moves the toggle switch 18 back to the first position so that the vehicle is again controllable from the driver's space 4. Thereafter the driver turns the starting key to start the vehicle's engine 3. Even if the driver forgets to reset the toggle switch 18 manually, such resetting takes place automatically as a safety measure when the starting key is turned in the ignition lock 16. The indicating lamp 19 goes out when the toggle switch 18 moves to the first position, as confirmation that the vehicle 1 has then become controllable from the driver's space 4.

The invention is in no way limited to the embodiment described but may be varied freely within the scopes of the claims. The invention is thus not limited to tanker vehicles but may be used in substantially all types of combined transport and work vehicles which require the operation of work equipment. The control unit described above need not take the form of a separate unit but may form part of the vehicle's overall electrical control system.

## Claims

1. A combined transport and work vehicle whereby the vehicle (1) comprises a first control (14-16) which makes it possible to effect at least one function from a driver's space (4) in the vehicle (1) at least in connection with use of the vehicle as a transport vehicle, and a second control (5) which makes it possible to effect said function from a space outside the driver's space (4) in connection with use of the vehicle as a work vehicle, **characterised in that** the vehicle (1) comprises a connecting means (18) which can be placed in a first position which indicates effecting of said function from the first control (14-16) and in a second position which indicates effecting of said function from the second control (5), and a control unit (9) which is arranged to use information about the position of the connecting means (18) to make it possible to effect said function from whichever control (5, 14-16) is indicated by the position of the connecting means (18), said connecting means (18) being arranged to be placed automatically in the first position when an ignition system (15) of the vehicle (1) is activated.

2. A combined transport and work vehicle according to claim 1, **characterised in that** the control unit (9) is arranged adjacent to the driver's space (4).

3. A combined transport and work vehicle according to claim 1 or 2, **characterised in that** the connecting means (18) is arranged in the driver's space (4).

4. A combined transport and work vehicle according to any one of the foregoing claims, **characterised in that** the connecting means is a toggle switch (18).

5. A combined transport and work vehicle according to any one of the foregoing claims, **characterised in that** the vehicle (1) comprises an indicating means (19) in the driver's space (4) which indicates when the connecting means (18) is in the second position.

6. A combined transport and work vehicle according to claim 5, **characterised in that** the second control is comprised in an operating unit (5) which comprises a cable link (6-8) with the control unit (9).

7. A combined transport and work vehicle according to any one of the foregoing claims, **characterised in that** the second control is comprised in an operating unit (5) which comprises at least one partly wireless link with the control unit (9).

8. A combined transport and work vehicle according to any one of the foregoing claims, **characterised in that** said function comprises control of the vehicle's prime mover (3).

9. A combined transport and work vehicle according to any one of the foregoing claims, **characterised in that** said function comprises control of warning equipment and/or work lighting of the vehicle.

## Revendications

1. Véhicule combiné de transport et utilitaire, tel que le véhicule (1) comprend un premier dispositif de commande (14 à 16) qui fait qu'il est possible d'exécuter au moins une fonction à partir d'un espace (4) du conducteur dans le véhicule (1), au moins conjointement à l'utilisation du véhicule en tant que véhicule de transport, et un deuxième dispositif de commande (5) qui fait qu'il est possible d'exécuter ladite fonction à partir d'un espace extérieur à l'espace (4) du conducteur, conjointement à l'utilisation du véhicule en tant que véhicule utilitaire, **caractérisé en ce que** le véhicule (1) comprend un moyen de liaison (18) qui peut être placé dans une première position qui indique l'exécution de ladite fonction à partir du premier dispositif de commande (14 à 16), et dans une deuxième position qui indique l'exécution de ladite fonction à partir du deuxième dispositif de commande (5), et une unité de commande (9), qui est agencée de manière à utiliser une information concernant la position du moyen de liaison (18) qui fait qu'il est possible d'exécuter ladite fonction à partir de l'un quelconque des dispositifs de commande (5, 14 à 16), est indiquée par la position du moyen de liaison (18), ledit moyen de liaison (18) étant agencé de manière à être placé automatiquement dans la première position lorsqu'un système d'allumage (5) du véhicule (1) est activé.

2. Véhicule combiné de transport et utilitaire selon la revendication 1, **caractérisé en ce que** l'unité de commande (9) est agencée de manière à être adjacente à l'espace (4) du conducteur.

3. Véhicule combiné de transport et utilitaire selon la revendication 1 ou 2, **caractérisé en ce que** le moyen de liaison (18) est agencé dans l'espace (4) du conducteur.

4. Véhicule combiné de transport et utilitaire selon l'une quelconque des revendications précédentes, **caractérisé en ce que** le moyen de liaison est un interrupteur à bascule (18).

5. Véhicule combiné de transport et utilitaire selon l'une quelconque des revendications précédentes, **caractérisé en ce que** le véhicule (1) comprend un moyen d'indication (19) dans l'espace (4) du conducteur, qui indique le moment auquel le moyen de liaison (18) se trouve dans la deuxième position.

6. Véhicule combiné de transport et utilitaire selon la revendication 5, **caractérisé en ce que** le deuxième dispositif de commande est compris dans une unité d'opération (5) qui comprend une liaison par câbles (6 à 8) avec l'unité de commande (9).

7. Véhicule combiné de transport et utilitaire selon l'une quelconque des revendications précédentes, **caractérisé en ce que** le deuxième dispositif de commande est compris dans une unité d'opération (5) qui comprend au moins une liaison partiellement sans fil avec l'unité de commande (9).

8. Véhicule combiné de transport et utilitaire selon l'une quelconque des revendications précédentes, **caractérisé en ce que** ladite fonction comprend la commande du moteur principal (3) du véhicule.

9. Véhicule combiné de transport et utilitaire selon l'une quelconque des revendications précédentes, **caractérisé en ce que** ladite fonction comprend la commande de l'équipement d'avertissement et/ou de l'éclairage d'utilisation du véhicule.

## Patentansprüche

1. Kombiniertes Transport- und Arbeitsfahrzeug, bei dem das Fahrzeug (1) eine erste Steuerung (14-16) aufweist, die es ermöglicht, mindestens eine Funktion vom Fahrerplatz (4) im Fahrzeug (1) aus mindestens in Verbindung mit der Benutzung des Fahrzeugs als Transportfahrzeug zu bewirken und eine zweite Steuerung (5), die es ermöglicht, die genannte Funktion von einer Stelle abseits des Fahrerplatzes (4) aus in Verbindung mit der Benutzung des Fahrzeugs als Arbeitsfahrzeug zu bewirken,
**dadurch gekennzeichnet, dass** das Fahrzeug (1) ein Schaltmittel (18) aufweist, das in eine erste Stellung stellbar ist, welche für das Bewirken der genannten Funktion von der ersten Steuerung (14-16) aus steht, und in eine zweite Stellung, welche für das Bewirken der genannten Funktion von der zweiten Steuerung (5) aus steht, und eine Steuereinheit (9), die dazu eingerichtet ist, eine Information über die Stellung des Schaltmittels (18) zu benutzen, um es zu ermöglichen, die genannte Funktion von derjenigen Steuerung (5, 14-16) aus zu bewirken, die durch die Stellung des Schaltmittels (18) angezeigt wird, wobei das Schaltmittel (18) dazu eingerichtet ist, automatisch die erste Stellung einzunehmen, wenn eine Zündeinrichtung (15) des Fahrzeugs (1) aktiviert wird.

2. Kombiniertes Transport- und Arbeitsfahrzeug nach Anspruch 1,
**dadurch gekennzeichnet, dass** die Steuereinheit (9) nahe dem Fahrerplatz (4) angeordnet ist.

3. Kombiniertes Transport- und Arbeitsfahrzeug nach Anspruch 1 oder 2,
**dadurch gekennzeichnet, dass** das Schaltmittel (18) am Fahrerplatz (4) angeordnet ist.

4. Kombiniertes Transport- und Arbeitsfahrzeug nach einem der vorangehenden Ansprüche,
**dadurch gekennzeichnet, dass** das Schaltmittel ein Kipphebelschalter (18) ist.

5. Kombiniertes Transport- und Arbeitsfahrzeug nach einem der vorangehenden Ansprüche,
**dadurch gekennzeichnet, dass** das Fahrzeug (1) am Fahrerplatz (4) ein Anzeigemittel (19) aufweist, das anzeigt, wenn das Schaltmittel (18) in der zweiten Stellung ist.

6. Kombiniertes Transport- und Arbeitsfahrzeug nach Anspruch 5,
**dadurch gekennzeichnet, dass** die zweite Steuerung in einer Betätigungseinheit (5) enthalten ist, die eine Kabelverbindung (6-8) mit der Steuereinheit (9) aufweist.

7. Kombiniertes Transport- und Arbeitsfahrzeug nach einem der vorangehenden Ansprüche,
**dadurch gekennzeichnet, dass** die zweite Steuerung in einer Betätigungseinheit (5) enthalten ist, die mindestens eine teilweise drahtlose Verbindung mit der Steuereinheit (9) aufweist.

8. Kombiniertes Transport- und Arbeitsfahrzeug nach einem der vorangehenden Ansprüche,
**dadurch gekennzeichnet, dass** die genannte Funktion die Steuerung des Antriebsmotors (3) des Fahrzeugs umfasst.

9. Kombiniertes Transport- und Arbeitsfahrzeug nach einem der vorangehenden Ansprüche,
**dadurch gekennzeichnet, dass** die genannte Funktion die Steuerung einer Warneinrichtung und/oder einer Arbeitsplatzbeleuchtung des Fahrzeugs umfasst.
